(19) Europäisches Patentamt
European Patent Office
Office européen des brevets

(11) **EP 0 525 894 B1**

(12) **EUROPEAN PATENT SPECIFICATION**

(45) Date of publication and mention
of the grant of the patent:
**10.05.2000 Bulletin 2000/19**

(51) Int. Cl.$^7$: **H04N 7/087**, H04N 7/06,
H04N 7/04

(21) Application number: **92202276.9**

(22) Date of filing: **24.07.1992**

(54) **Presentation system for messages that provide information on demand, and transmitter station and receiver station for use in such presentation system.**

Darstellungssystem für Nachrichten, die auf Anfrage Information erteilen, Sendestation und Empfängerstation zur Verwendung in einem derartigen Darstellungssystem

Système pour présenter des messages fournissant de l'information sur demande et postes émetteur et récepteur destinés à être utilisés dans un tel système

(84) Designated Contracting States:
**DE FR GB IT**

(30) Priority: **02.08.1991 EP 91201998**

(43) Date of publication of application:
**03.02.1993 Bulletin 1993/05**

(73) Proprietor:
**Koninklijke Philips Electronics N.V.
5621 BA Eindhoven (NL)**

(72) Inventors:
• **Hollmann, Hendrik Dirk Lodewijk
NL-5656 AA Eindhoven (NL)**
• **Holzscherer, Constantijn David
NL-5656 AA Eindhoven (NL)**

(74) Representative:
**Groenendaal, Antonius Wilhelmus Maria et al
INTERNATIONAAL OCTROOIBUREAU B.V.,
Prof. Holstlaan 6
5656 AA Eindhoven (NL)**

(56) References cited:
**WO-A-90/13970**

**Description**

FIELD OF THE INVENTION

The invention relates to a presentation system for presenting a message to a transmission medium for playback by a receiver, the message being divided into parts that each have a sequence number within said message; the system being operative to present the parts according to a recurrent scheme of successive periods, each part having a respective average recurrence time of being presented to the transmission medium. The transmission medium may be one or more broadcast channels in parallel, one or more line interconnections in parallel, or other. A well-known example is Teletext, wherein a sequence of teletext pages are repeatedly broadcast in a fixed sequence, and a subscriber may access any page by means of association with an address. When the intended page appears, it may be stored locally and subsequently be viewed for an arbitrary interval. A teletext page may be an isolated item, or it may form part of a series of items that have linked contents, such as a plural-page publication would have. The time between addressing and appearance, the so-called latency, has long been recognized as a problem and various mechanisms have been proposed for improvement, such as:

- presenting more often those pages that are in high demand;
- limiting the number of pages;
- prerecording, in that such pages that "relate" to an accessed page are co-addressed and stored, although it is not sure that they will effectively be required; these linked pages may occur in the sequence after the page accessed first, or before it;
- increasing the number of channels, and/or the throughput on any particular channel.

Latency, of course, has two aspects, the average latency, and the maximum latency. In particular, the maximum latency has been viewed as presenting consumer nuisance. The way of using may be various:

- still pages, such as Teletext;
- a sequence of frames according to a prespecified sequence at standard presentation speed as a movie;
- a continuous stream of audio, such as music;
- semi-randomly addressable.

WO-A-90 13970 discloses a presentation system for presenting teletext pages, wherein a particular message is divided into parts, formed by a basic part and one or more complementary parts. The basic part corresponds to a conventional teletext page (level 1 specification of the teletext standard), whereas the complementary parts provide complementary data (level 2 of the teletext standard), such as special signs, fine textures and colour shadings. The complementary parts are transmitted as pages. In the receiver, the complementary page(s) associated with a specific teletext page are stored temporarily and separately from the corresponding teletext page and processed so that signs associated with the basic data are displayed in those sign positions where no complementary data are present. The signs associated with the basic data in co-operation with the complementary data are displayed in those sign positions where complementary data are present. The known system provides no solution for reducing the latency in viewing the basic page.

SUMMARY OF THE INVENTION

Amongst other things, it is an object of the present invention to diminish maximum latency, without having recourse to a great extent of prerecording. Prerecording, herein, is storing such information before the receiver has signalled that it is intended to need a particular information. Access to the first part of a message will raise appreciably the chance that later parts also will be accessed, in particular when a receiver person would feel that missing such later part would render the message incomplete, such as a movie, a piece of music or a set of coherent data. Storing such later part is then postrecording. Access to a particular message has little consequence for the chance that a particular other message also will be accessed. Storing the latter would then be prerecording. Of course, there is no yes/no discrimination between prerecording and postrecording, such as it could be the case in an interactive setting, where a receiver person's response could decide on branching left or right in an animated movie's program. Generally, the lower the probability that a particular next item could be accessed, the more storage accommodation in general is required. Therefore, generally, prerecording is expensive, because there is usually no clue available as to what message an unknown user would access next, while broadcasting and the like is quite cheap in comparison to such recording at multiple locations. According to one of its aspects, the invention provides a presentation system that is characterised in that in that the average recurrence time of the parts is substantially a non-decreasing function of the sequence number of the parts, and wherein at least for one part with a higher sequence number an average first cycle of presenting the part is phase-shifted with respect to a second cycle of presenting a second part with a lower sequence number; the shift being over a fraction of the average recurrence time of the second part that is shorter than the average recurrence time of the first part, and wherein the lower sequence number is a divisor of the higher sequence number.

The general idea is based on the insight that the latency now may be determined largely by the first part in the sequence of parts. Later parts are transmitted relatively rarely. Due to the fact that the receiver knows what to look for, as it were, besides the first part, all other parts that would be necessary may now be postrecorded even before the first part is encountered actually. It will be shown that such will effectively diminish the maximum latency under all circumstances.

Advantageously, said parts are presented according to a presentation pattern that upon accessing of the message's first part allows contiguous accessing of all other parts according to a standard presentation velocity as from a time instant that is within a prespecified distance from the start of accessing said first part. The standard presentation velocity would correspond to the velocity a receiver would want to actually receive successive parts of a message. Sometimes, this standard velocity is known beforehand, such as in case of a movie or a piece of music. In other cases, at least an educated guess can be made about it, such as a standard reading velocity through a page of text. In text, the reader may turn the pages independently. In other fields of use, the receiving person is passive as regards the presentation velocity. Preferably, the said distance is zero. Upon reception of the first part, user access to succeeding parts is unencumbered.

Advantageously, any said part has an average recurrence time, and wherein said average recurrence times for the respective parts form a series that is substantially non-decreasing as a function of the position of occurrence of the associated part within the message. It has been found that the optimum is to have the series non-decreasing. For infinitely short parts, the recurrence times should be proportional to their position in the message, which in practice is not attainable. Further, for particular reasons, the monotonicity of the series may be interrupted at one or at a few points.

Advantageously, said medium has an inherent multiplicity, that each receive respective selections among said parts. The multiplicity, as herein defined, with respect to a single message is the maximum number of parts that is simultaneously presented to the medium. For example, if three parts can be presented at their normal viewing (for a movie) velocity, the multiplicity is equal to three. If the presentation velocity is twice as high, thereby allowing for time division multiplex, the multiplicity is equal to six. For the medium as a whole, as opposed to the medium as applicable to a single message, as defined supra, there may be many more message presentable simultaneously, such as in the case of radio broadcast.

Advantageously, for an earlier part a product of a maximum value of an actual recurrence interval and an inherent multiplicity of said medium is less than said message's length for standard presentation, while for a later part said product exceeds said length. Now, in particular the multiplicity of the medium allows to transmit later parts relatively rarely, while by a kind of somewhat randomizing sequencing of those later parts still keeping the secondary latency quite low, that is, after presentation of any part to a user, the next part either follows directly as presented by the source, or it had been received earlier, so that it may be reproduced from postrecording storage.

Advantageously, for at least a first subset of earlier parts within said message said recurrence interval is uniform in time, and for at least a second subset of later parts within said message said recurrence interval is non-uniform in time. Although, repeating the first part of a message continually produces a simple repetition pattern, in various respect the performance may be raised by a more complicated pattern as recited. Note that the presentation of a message part to the medium may be at multiple speed of the standard accessing speed of a user. In that case, the channel is multiple by time division multiplex. Other types of multiplicity are feasible as well.

The invention also relates to a transmitter station and to a receiver station for use in a presentation system as recited.

Further advantageous aspects are recited in dependent Claims.

BRIEF DESCRIPTION OF THE FIGURES

The invention will be described in detail with respect to the following Figures, which respectively show:

Figure 1 a presentation system according to the invention;
Figures 2A..2C, 3A, 3B, 4A, 4B various multipart message organization.

DESCRIPTION OF A PREFERRED EMBODIMENT

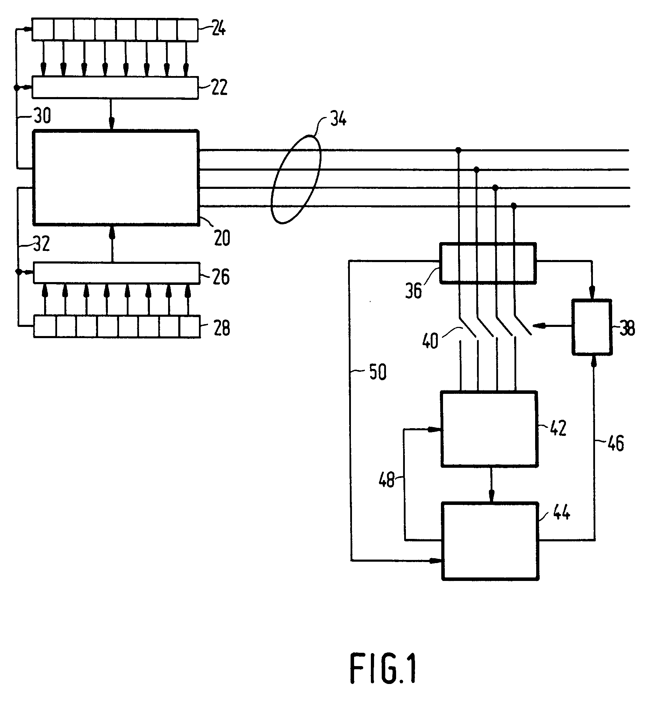

Figure 1 shows a presentation system according to the invention. Presentation or transmitter station 20 is attached to medium 34, which in this ease has four parallel channels. Two messages, each containing eight parts, are stored in associated memory 24, 28 and can be read therefrom via accessing elements 22, 26 under control by presentation station 20 via lines 30, 32, on a partwise selective basis. At any time presentation station 20 may on each channel of medium 34 present a single part. The combined multiplicity of presentation medium 34 equals 4, in consequence. Various examples of presentation patterns will be discussed hereinafter. The channels may be time division multiplex or frequency division multiplex. Presentation may be according to a standard velocity, such as according to a television broadcast standard. Alternatively, presentation could be twice as fast, so that on each physical channel, two logical channels may alternate. Line usage may be privileged to a particular message or intermixed/shared. Various different presentation patterns could be coexistent.

Block 44 is a receiver. Block 36 is a header recognizer. Block 38 is an access scheduler, block 42 intermediate postrecording storage. Receiver 44 signals to scheduler 38 the identity of an intended message. All message parts have a header information that specifies at least message identity and part number with their message. If the first part of the message in question is detected by recognizer 36, this is signalled to scheduler 38, which closes the associated switch of switches 40. Moreover, also the receiver is informed, because in certain circumstances, the receiver may now begin accessing the whole message at a standard presentation velocity. Various successive parts of the message will now be detected/received, and they will be either forwarded directly to receiver 44, or be stored in intermediate storage 42. Access to intermediate storage is by line 48. Scheduler 38 in some eases would know when and where subsequent parts of the message would arrive, so no detection would be necessary. In other cases, such detection is always necessary. In practice, co-packaging of elements 36, 38, 40, 42, 44 renders them collectively a receiver station.

## DESCRIPTION OF VARIOUS MULTIPART MESSAGE ORGANIZATIONS

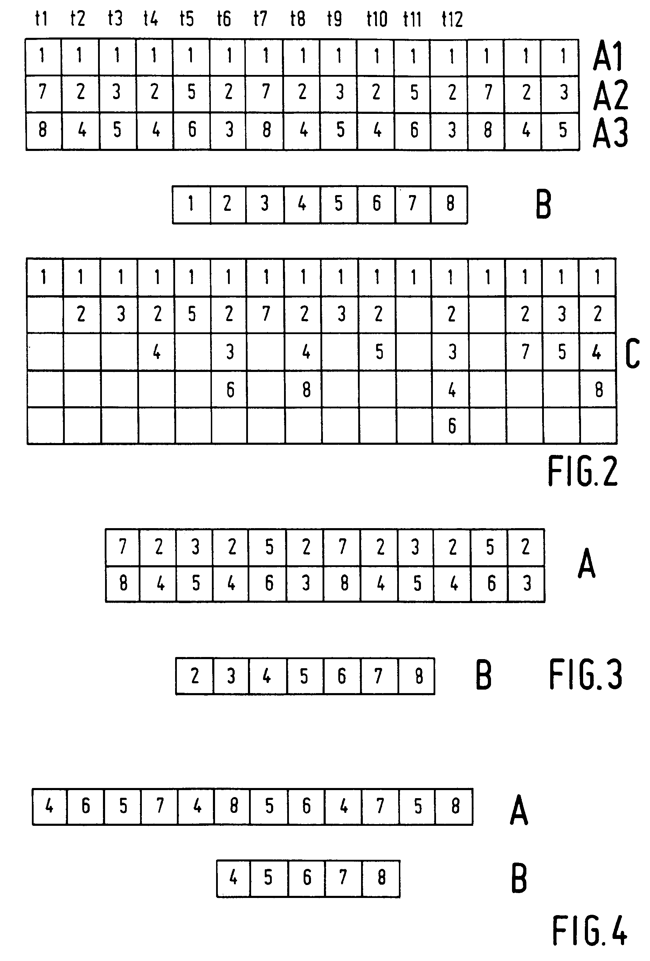

Figure 2 shows a first multipart message organization. The physical aspects of the presentation are foregone, inasmuch as they may be realized in conventional manner. For one, the message may be a movie, of for example, a duration of 80 minutes. Now, the movie is divided into parts 1..8 and is transmitted over three channels, A1, A2, A3 respectively, and wherein each block as shown contains the associated part in real time. The maximum latency of part 1 is one block, that is 1/8 of the message's length. After accessing of part 1, other parts are stored as necessary. The top scale indicates the time. When at the start of t1 access has already taken place, part 1 is read and displayed. During interval t2, part 2 is read. During interval t3, part 3 is read. During interval t4, part 4 is read. During interval t5, part 5 is read, and furthermore, part 6 is stored. During interval t6, part 6 is displayed and deleted (if necessary). During interval t7, part 7 is read and part 8 is stored. During interval t8, part 8 is displayed and deleted. Therefore, maximum storage capacity is for one part, which does not appear excessive. If the accessing has just taken place at the beginning of period t5, during that interval part 1 is read, part 6 is stored. During interval t6, part 2 is read, part 3 is stored. During interval t7, part 3 is displayed and deleted, and parts 7, 8 are stored. During interval t8, part 4 is read. During interval t9, part 5 is read. During interval t10, part 6 is displayed and deleted. During interval t11, part 7 is displayed and deleted. During interval t12, part 8 is displayed and deleted. Now, postrecording must accommodate 3 parts, which may be appreciable. The two situations represent the extremes, and the latter storage requirement represents worst case.

Figure 2B shows the multipart format of the message.

Figure 2C shows the minimum requirements for presentation: part 1 is presented every interval, part 2 every second interval, part 3 every third interval, and so on. For a maximum latency of one interval, that is 1/8th of the message's length, the presenting of the first message requires 1 channel, of the second 1/2, etcetera. The total numer of equivalent channels is $1 + \frac{1}{2} + \frac{1}{3} + ...$, provided that no interference with other presentation schemes occurs. The postrecording storage is the same as in Figure 1A: three parts. Here, however, the number of available channels is 5, compared with 3 in Figure 1A. In theory, the maximum number of parts in the organization of Figure 1A (first part repeated continually) is ten. In practice, due to number-theoretical problems, it is lower. Generally, the period becomes much longer than the message length; also non-periodic solutions would apply.

Figure 3 shows a version that is slightly degenerate with respect to Figure 2, in that the first channel and the first part have been deleted. Figure 3B now shows the message. Figure 3A shows the presentation pattern. The maximum latency now is 2/7 at a maximum postrecording capacity of three parts.

Figure 4 shows a one-channel version, that amazingly, performs better than a straight repetition of the message. Now, the message has 5 parts, maximum latency is 4/5 and storage requirement is three parts.

In general it can be proven that the minimum attainable value for the maximum latency is $\omega = (e^m - 1)^{-1}$, wherein m is the multiplicity. For m = 3, this yields $\omega_{opt} \cong 1/19$, which is much better than the result of Fig. 2. As will be shown hereinafter, the result of Fig. 2A can be modified to get other, more complicated schemes that perform better.

## DIMINISHING STORAGE REQUIREMENTS

In the sequel we use a so-called multiply construction to "average" the use of memory. The idea is as follows.

Let $B = [B_0 \ B_1 \ ... \ B_{N-1}]$ be a broadcast (= presentation) scheme with period N and let p, the multiply factor, be a positive integer. Then we form a new scheme $C = [C_0 \ C_1 \ ... \ C_{pN-1}]$ with period pN, by defining

$$C_{pi+j} := pB_{i+j} + j := \{pb + j^i b \varepsilon B_{i+j}\}.$$

The new scheme C is again a broadcast wherein B and C have the same maximum waiting time $\omega$. In general the new scheme C can be realised with a smaller memory, i.e., has a smaller M. This is one possible "averaging" construction to decrease M. Note that b represents the elements of column B.

EXAMPLE 1: $\omega = 1/3$, M = 1/6

Our starting point is:

$$\begin{bmatrix} 1 & 1 \\ 2 & 3 \end{bmatrix}$$

This scheme has $\omega = 1/3$, and M = 0, or 1/3, depending on the time slot in which the request is made (the first slot is numbered 0 as different from Figs. 2-4). Now, if we multiply by p = 2, we obtain

$$\begin{bmatrix} 3 & 2 & 3 & 2 \\ 7 & 6 & 5 & 4 \end{bmatrix}$$

This is periodic with period N = 4, and has $\omega = 1/3$. The average waiting time is only $\omega/2 = 1/6$. This new scheme has M = 1/6. This can be seen from the following two memory occupation schedules. The first schedule applies to the ease of a request made before time slot 0, i.e. during time slots 2, or 3. The second line gives the contents of postrecording storage.

| 2 | 3 | 4 | 5 | 6 | 7 |
|---|---|---|---|---|---|
|   | 4 |   | 6 |   |   |

The second schedule applies if a request is made before time slot 2, i.e. during time slots 0, or 1.

| 2 | 3 | 4 | 5 | 6 | 7 |
|---|---|---|---|---|---|
|   |   | 5 |   | 7 |   |

It is open to debate whether a practical realisation for the above scheme can be found using this amount of memory. We will discuss this problem at this point. All remarks also apply to the more complicated schemes later. In the first schedule above, during time slot $5 \equiv 1$ at the same time part 5 is read from the memory and part 7 is stored into the memory. A solution might be to read and write at double speed, or to use one buffer memory which can store one part (= 1/n) of the message. This last solution could apply to later cases if more than one memory location is used.
Alternatively, instead of using two channels, we might use one channel at double speed (multiplexing). This has great influence on the memory problem.

Also, this allows more freedom in the choice of possible broadcast schemes, but does not influence the lower bound on $\omega$ derived earlier. Suppose that each part consists of r frames, where r is large. Let part k consists of frames $k_1, ..., k_r$, k = 2, ..., 7. Consider the following, multiplexed, one-channel broadcast scheme derived from the two-channel scheme above in the obvious way.

$$[2_1\ 4_1\ 2_2\ 4_2\ ...\ 3_1\ 7_1\ 3_2\ 7_2\ ...\ 2_1\ 6_1\ 2_2\ 6_2\ ...\ 3_1\ 7_1\ 3_2\ 7_2\ ...]$$

This broadcast scheme can be realized with M = 1/6 while avoiding simultaneous reading/writing in the memory.

EXAMPLE 2: $\omega = 1/5$, M = 1/10, m = 3

Our starting point is

$$\begin{bmatrix} 1 & 1 \\ 2 & 3 \\ 4 & 5 \end{bmatrix}$$

This scheme has $\omega = 1/5$, and M = 0, or 1/5, depending on the time slot in which the request is made. The basic construction to multiply by p = 2, gives

$$\begin{bmatrix} 2 & 3 & 2 & 3 \\ 4 & 7 & 6 & 5 \\ 8 & 11 & 10 & 9 \end{bmatrix}$$

This new scheme is periodic with period N = 4, and has $\omega = 1/5$. The average waiting time for this scheme is only $\omega/2 = 1/10$. This new scheme has M = 1/10.

EXAMPLE 3: $\omega = 1/7$, M = 3/14

Our starting point is derived from the last scheme in Example 1.

$$\begin{bmatrix} 1 & 1 & 1 & 1 \\ 2 & 3 & 2 & 3 \\ 4 & 7 & 6 & 5 \end{bmatrix}$$

This scheme has $\omega = 1/7$, and M = 1/7, or 2/7, depending on the time slot in which the request is made. Multiply by p = 2, gives:

$$\begin{bmatrix} 2 & 3 & 2 & 3 & 2 & 3 & 2 & 3 \\ 4 & 7 & 6 & 5 & 4 & 7 & 6 & 5 \\ 8 & 15 & 14 & 13 & 12 & 11 & 10 & 9 \end{bmatrix}$$

This new scheme, which is periodic with period N = 8, still has $\omega$ = 1/7. The average waiting time is only $\omega/2$ = 1/14. This new scheme has M = 3/14.

EXAMPLE 4: $\omega$ = 1/7, M = 1/14, m = 4

Our starting point is

$$\begin{bmatrix} 1 & 1 \\ 2 & 3 \\ 4 & 5 \\ 6 & 7 \end{bmatrix}$$

This scheme has $\omega$ = 1/7, and M = 0, or 1/7, depending on the time slot in which the request is made. Multiply by p = 2 obtains

$$\begin{bmatrix} 2 & 3 & 2 & 3 \\ 4 & 7 & 6 & 5 \\ 8 & 11 & 10 & 9 \\ 12 & 15 & 14 & 13 \end{bmatrix}$$

This new scheme is periodic with period N = 4, and has $\omega$ = 1/7. The average waiting time is $\omega/2$ = 1/14.

EXAMPLES: $\omega$ = 1/11, M = 3/22

Our starting point is

$$\begin{bmatrix} 1 & 1 & 1 & 1 \\ 2 & 3 & 2 & 3 \\ 4 & 7 & 6 & 5 \\ 8 & 11 & 10 & 9 \end{bmatrix}$$

This scheme has $\omega$ = 1/11, and M = 1/11, or 2/11, depending on the time slot in which the request is made. Multiply by p = 2, obtains

$$\begin{bmatrix} 2 & 3 & 2 & 3 & 2 & 3 & 2 & 3 \\ 4 & 7 & 6 & 5 & 4 & 7 & 6 & 5 \\ 8 & 15 & 14 & 13 & 12 & 11 & 10 & 9 \\ 16 & 23 & 22 & 21 & 20 & 19 & 18 & 17 \end{bmatrix}$$

This new scheme is periodic with period N = 8, and has $\omega$ = 1/11. The average waiting time is only $\omega/2$ = 1/22. This new scheme has M = 3/22.

EXAMPLE 6

Consider the following three broadcast schemes A, B, and B' defined below.

$$A := \begin{bmatrix} 1 & 1 & 1 & 1 & 1 & 1 \\ 7 & 2 & 3 & 2 & 5 & 2 \\ 4 & 8 & 5 & 4 & 6 & 3 \end{bmatrix},$$

**Claims**

1. A presentation system for presenting a message to a transmission medium for playback by a receiver, the message being divided into parts that each have a sequence number within said message; the system being operative to present the parts according to a recurrent scheme of successive periods, each part having a respective average recurrence time of being presented to the transmission medium; characterized in that the average recurrence time of the parts is substantially a non-decreasing function of the sequence number of the parts, and wherein at least for one part with a higher sequence number an average first cycle of presenting the part is phase-shifted with respect to a second cycle of presenting a second part with a lower sequence number; the shift being over a fraction of the average recurrence time of the second part that is shorter than the average recurrence time of the first part, and wherein the lower sequence number is a divisor of the higher sequence number.

2. A system as claimed in Claim 1, wherein said parts are presented according to a presentation pattern that upon accessing of the message's first part allows contiguous accessing of all other parts according to a standard presentation velocity as from a time instant that is within a prespecified distance from the start of accessing said first part.

3. A system as claimed in Claim 2, wherein said distance is zero.

4. A system as claimed in any of Claims 1 to 3, wherein said presentation medium has an inherent multiplicity, each for transmitting respective selections among said parts.

5. A system as claimed in Claim 4, wherein said multiplicity is according to a time-division multiplex and/or frequency division multiplex organization.

6. A system method as claimed in Claim 4 or 5, wherein said multiplicity is at least equal to three.

7. A system as claimed in any of Claims 1 to 6, wherein for an earlier part a product of a maximum value of an actual recurrence interval and an inherent multiplicity of said medium is less than said message's duration for playback at a standard velocity, while for a later part said product exceeds said duration.

8. A system as claimed in any of Claims 1 to 7, wherein said message comprises moveable video.

9. A system as claimed in any of Claims 1 to 8, wherein said message comprises audio information.

10. A system as claimed in any of Claims 1 to 9, wherein said message comprises computer data.

11. A system as claimed in any of Claims 1 to 10, wherein for at least a first subset of earlier parts within said message said recurrence interval is uniform in time, and for at least a second subset of later parts within said message said recurrence interval is non-uniform in time.

12. A system as claimed in Claim 11, wherein for the part occurring first in said message the recurrence period is greater than its duration according to a standard playback velocity of the receiver.

13. A system as claimed in any of Claims 1 to 12, wherein said presentation comprises successive intervals of substantially uniform lengths that each have a substantially uniform occurrence number pattern for all said parts.

14. A system as claimed in Claim 13 wherein said intervals have exactly uniform lengths and exactly uniform occurrence pattern for all said parts.

15. A system as claimed in any of Claims 1 to 12, wherein said presentation comprises successive intervals of substantially uniform lengths, and each have a particular occurrence pattern for said parts, thereby producing a finite set of different intervals that each are repeated along with said presentation.

16. A system as claimed in any of Claims 1 to 12, wherein said presentation pattern is non-periodic.

17. A transmitter station for use in a presentation system as claimed in any of Claims 1 to 16.

18. A receiver station for use in a presentation system as claimed in any of Claims 1 to 16 and having recognition means for at least one predetermined message's first part and appropriate postrecording storage for that message's further parts.

19. A method for presenting a message to a transmission medium for playback by a receiver, the message being divided into parts that each have a sequence number within said message; the method comprising presenting the parts according to a recurrent scheme of successive periods, each part having a respective average recurrence time of being presented to the transmission medium; characterized in that the average recurrence time of the parts is substantially a non-decreasing function of the sequence number of the parts, and wherein at least for one part with a higher sequence number an average first cycle of presenting the part is phase-shifted with respect to a second cycle of presenting a second part with a lower sequence number; the shift being over a fraction of the average recurrence time of the second part that is shorter than the average recurrence time of the first part, and wherein the lower sequence number is a divisor of the higher sequence number.

**Patentansprüche**

1. Wiedergabesystem zum Zuführen einer Nachricht zu einem Übertragungsmedium zur Wiedergabe an einem Empfänger, wobei die genannte Nachricht in Teile aufgeteilt wird, die je eine Folgenummer innerhalb der genannten Nachricht haben; wobei das System funktioniert zum Zuführen der Teile entsprechend einem sich wiederholenden Schema aufeinanderfolgender Perioden, wobei jeder Teil eine betreffende mittlere Wiederholungszeit hat, dass er dem Übertragungsmedium zugeführt wird, dadurch gekennzeichnet, dass die mittlere Wiederholungszeit der Teile im Wesentlichen eine nicht verringernde Funktion der Folgenummer der Teile ist und dass wenigstens für einen Teil mit einer höheren Folgenummer ein mittlerer erster Zyklus der Wiedergabe des Teils gegenüber einem zweiten Zyklus der Wiedergabe eines zweiten Teils mit einer niedrigeren Folgenummer phasenverschoben ist, wobei diese Verschiebung einen Bruchteil der mittleren Wiederholungszeit des zweiten Teils beträgt, der kürzer ist als die mittlere Wiederholungzeit des ersten Teils, und wobei die niedrigere Folgenummer ein Teiler der höheren Folgenummer ist.

2. System nach Anspruch 1, wobei die genannten Teile entsprechend einem Wiedergabemuster angeboten werden, das beim Zugriff auf den ersten Teil der Nachricht einen nachfolgenden Zugriff auf alle anderen Teile entsprechend einer Standard-Wiedergabegeschwindigkeit ermöglicht, und zwar von einem Zeitpunkt an, der in einem bestimmten Abstand von der Anfang des Zugriffs auf den genannten ersten Teil liegt.

3. System nach Anspruch 2, wobei der genannte Abstand Null ist.

4. System nach Anspruch einem der Ansprüche 1 bis 3, wobei das genannte Wiedergabemedium eine inhärente Verschiedenheit hat, je zum Übertragen der betreffenden Selektionen aus den genannten teilen.

5. System nach Anspruch 4, wobei die genannte Verschiedenheit einer Zeitmultiplex- und/oder einer Frequenzmultiplexorganisation entspricht.

6. Systemverfahren nach Anspruch 4 oder 5, wobei die genannte Verschiedenheit wenigstens gleich drei ist.

7. System nach einem der Ansprüche 1 bis 6, wobei für einen früheren Teil ein Produkt aus einem maximalen Wert eines aktuellen Wiederholungsintervalls und einer inhärenten Verschiedenheit des genannten Mediums Kleiner ist als die genannte Dauer der Nachricht zur Wiedergabe mit einer Standardgeschwindigkeit, während für einen späteren Teil das genannte Produkt die genannte Dauer übersteigt.

8. System nach einem der Ansprüche 1 bis 7, wobei die genannte Nachricht Bewegt-Videobilder umfasst.

9. System nach einem der Ansprüche 1 bis 8, wobei die genannte Nachricht Audio-Information umfasst.

10. System nach einem der Ansprüche 1 bis 9, wobei die genannte Nachricht Computerdaten aufweist.

11. System nach einem der Ansprüche 1 bis 10, wobei für wenigstens einen ersten Sub-Satz frührere Teile innerhalb der genannten Nachricht das genannte Wiederholungsintervall in der Zeit einheitlich ist, und für wenigstens einen zweiten Sub-Satz späterer Teile innerhalb der genannten Nachricht das genannte Wiederholungsintervall nicht einheitlich in der Zeit ist.

12. System nach Anspruch 11, wobei für den Teil, der in der Nachricht als erster auftritt, die Wiederholungsperiode größer ist als die Dauer entsprechend einer Standard-Wiedergabegeschwindigkeit des Empfängers.

13. System nach Anspruch einem der Ansprüche 1 bis 12, wobei die genannte Wiedergabe aufeinanderfolgende Intervalle nahezu einheitlicher Länge aufweist, die je ein nahezu einheitliches Wiederholungsmuster für alle genannten Teile haben.

14. System nach Anspruch 13, wobei die genannten Intervalle genau einheitliche Längen und ein genau einheitliches Muster für alle genannten Teile haben.

15. System nach Anspruch einem der Ansprüche 1 bis 12, wobei die genannte Wiedergabe aufeinanderfolgende Intervalle nahezu einheitlicher Länge haben und die je ein bestimmtes Wiederholungsmuster für die genannten Teile aufweisen, wodurch ein schlussendlicher Satz verschiedener Intervalle erzeugt wird, die je während der genannten Wiedergabe wiederholt werden.

16. System nach einem der Ansprüche 1 bis 12, wobei das genannte Wiedergabemuster nicht periodisch ist.

17. Sendestation zum Gebrauch in einem Wiedergabesystem nach einem der Ansprüche 1 bis 16.

18. Empfangsstation zum Gebrauch in einem Wiedergabesystem nach einem der Ansprüche 1 bis 16, mit Erkennungsmitteln für wenigstens einen vorbestimmten ersten Teil der Nachricht und mit einer geeigneten Nachaufzeichnungsspeicherung für die weiteren Teile dieser Nachricht.

19. Verfahren zum Anbieten einer Nachricht an ein Übertragungsmedium zur Wiedergabe durch einen Empfänger, wobei die Nachricht in Teile aufgeteilt wird, die je eine Folgenummer innerhalb der genannten Nachricht haben; wobei das Verfahren die nachfolgenden Verfahrensschritte umfasst: das Zuführen der Teile nach einem Wiederholungsschema aufeinanderfolgender Perioden, wobei jeder Teil eine betreffende mittlere Wiederholungszeit hat, dass dieser Teil dem Übertragungsmedium zugeführt wird, dadurch gekennzeichnet, dass die mittlere Wiederholungszeit der Teile im Wesentlichen eine nicht abnehmende Funktion der Folgenummer der Teile ist und wobei wenigstens für einen Teil mit einer höheren Folgenummer ein mittlerer erster Zyklus der Zuführung des Teils gegenüber einem zweiten Zyklus der Zuführung eines zweiten Teils mit einer niedrigeren Folgenummer phasenverschoben ist; wobei die Phasenverschiebung einem Bruchteil der mittleren Wiederholungszeit des zweiten Teils entspricht. was kürzer ist als die mittlere Wiederholungszeit des ersten Teils, und wobei die niedrigere Folgenummer ein Teiler der höheren Folgenummer ist.

## Revendications

1. Système de présentation pour présenter un message à un milieu de transmission pour reproduction par un récepteur, le message étant divisé en parties ayant chacune un numéro d'ordre au sein dudit message; le système pouvant être utilisé pour présenter les parties suivant un schéma récurrent de périodes successives, chaque partie ayant une durée moyenne respective de récurrence de présentation au milieu de transmission; caractérisé en ce que la durée moyenne de récurrence des parties est en grande partie une fonction non décroissante du numéro d'ordre des parties, et dans lequel, au moins pour une partie ayant un numéro d'ordre supérieur, un premier cycle moyen de présentation de la partie est déphasé par rapport à un deuxième cycle de présentation d'une deuxième partie ayant un numéro d'ordre inférieur; le déphasage étant d'une fraction de la durée moyenne de récurrence de la deuxième partie- qui est plus courte que la durée moyenne de récurrence de la première partie, et dans lequel le numéro d'ordre inférieur est un diviseur du numéro d'ordre supérieur.

2. Système suivant la revendication 1, dans lequel lesdites parties sont présentées suivant un schéma de présentation permettant, lors de l'accès à la première partie du message, l'accès contigu à toutes les autres parties, à une vitesse standard de présentation, à partir d'un instant compris dans une distance prédéterminée du début de l'accès à ladite première partie.

3. Système suivant la revendication 2, dans lequel ladite distance est égale à zéro.

4. Système suivant l'une quelconque des revendications 1 à 3, dans lequel le milieu de présentation possède une multiplicité inhérente, chacun pour transmettre des sélections respectives parmi lesdites parties.

5. Système suivant la revendication 4, dans lequel ladite multiplicité est conforme à une organisation de multiplexage temporel et/ou fréquentiel.

6. Système suivant la revendication 4 ou 5, dans lequel ladite multiplicité est au moins égale à trois.

7. Système suivant l'une quelconque des revendications 1 à 6, dans lequel pour une partie antérieure, le produit d'une valeur maximale d'un intervalle de récurrence réel et d'une multiplicité inhérente dudit milieu est inférieur à la durée dudit message pour reproduction à une vitesse standard, tandis que pour une partie ultérieure, ledit produit excède ladite durée.

8. Système suivant l'une quelconque des revendications 1 à 7, dans lequel ledit message comprend des informations vidéo mobiles.

9. Système suivant l'une quelconque des revendications 1 à 8, dans lequel le message comprend des informations audio.

10. Système suivant l'une quelconque des revendications 1 à 9, dans lequel le message comprend des données informatiques.

11. Système suivant l'une quelconque des revendications 1 à 10, dans lequel, pour au moins un premier sous-ensemble de parties antérieures au sein dudit message, l'intervalle de récurrence est uniforme en temps, et pour au moins un deuxième sous-ensemble de parties ultérieures au sein dudit message, ledit intervalle de récurrence n'est pas uniforme en temps.

12. Système suivant la revendication 11, dans lequel, pour la partie apparaissant en premier lieu dans ledit message, la période de récurrence est supérieure à sa durée conformément à une vitesse standard de reproduction du récepteur.

13. Système suivant l'une quelconque des revendications 1 à 12, dans lequel ladite présentation comprend des intervalles successifs de longueurs essentiellement uniformes ayant chacun un schéma de nombre d'occurrences sensiblement uniforme pour toutes lesdites parties.

14. Système suivant la revendication 13, dans lequel lesdits intervalles ont des longueurs exactement uniformes et un schéma d'occurrence exactement uniforme pour toutes lesdites parties.

15. Système suivant l'une quelconque des revendications 1 à 12, dans lequel ladite présentation comprend des intervalles successifs de longueurs sensiblement uniformes et dont chacun présente un schéma particulier d'occurrence pour lesdites parties, produisant ainsi un ensemble fini d'intervalles différents dont chacun est répété avec ladite présentation.

**16.** Système suivant l'une quelconque des revendications 1 à 12, dans lequel ledit schéma de présentation est non périodique.

**17.** Poste de transmission destiné à être utilisé dans un système de présentation suivant l'une quelconque des revendications 1 à 16.

**18.** Poste récepteur destiné à être utilisé dans un système de présentation suivant l'une quelconque des revendications 1 à 16 et possédant des moyens de détection pour au moins une première partie de message prédéterminée et une mémoire de postenregistrement appropriée pour les autres parties de ce message.

**19.** Procédé de présentation d'un message à un milieu de transmission pour reproduction par un récepteur, le message étant divisé en parties qui ont chacune un numéro d'ordre au sein dudit message; le procédé comprenant la présentation des parties suivant une combinaison récurrente de périodes successives, chaque partie ayant une durée moyenne respective de récurrence de présentation au milieu de transmission; caractérisé en ce que la durée moyenne de récurrence des parties est en grande partie une fonction non décroissante du numéro d'ordre des parties, et dans lequel, au moins pour une partie ayant un numéro d'ordre supérieur, un premier cycle moyen de présentation de la partie est déphasé par rapport à un deuxième cycle de présentation d'une deuxième partie ayant un numéro d'ordre inférieur ; le déphasage étant d'une fraction de la durée moyenne de récurrence de la deuxième partie, c'est-à-dire plus court que la durée moyenne de récurrence de la première partie, et dans lequel le numéro d'ordre inférieur est un diviseur du numéro d'ordre supérieur.

FIG.1

FIG.2

FIG.3

FIG.4